# EUROPEAN PATENT APPLICATION

(11) **EP 0 932 157 A1**
(43) Date of publication of application: **28.07.1999**
(21) Application number: 98200201.6
(22) Date of filing: 26.01.1998
(51) Int. Cl.: G11B 27/00, G11B 27/10, G11B 20/10

(54) **Automatically performed crossover between two consecutively played back sets of audio data**

(71) Applicant: Deutsche Thomson-Brandt GmbH, 30543 Hannover (DE)
(72) Inventor: Lhopital, Christophe, 92648 Boulogne Cedex (FR)
(74) Representative: Zhang, Jianguo

(57) **Abstract**

The invention relates to a method and a device for automatically performing a crossover between two songs (1,2) which are played back consecutively. As soon as a determined end part (6, 3) of the first song is detected (7, 8), this end part is played back simultaneously (9) with a begin part (4) of the second song (2). After playback of the end part, the playback continues (10) for the second song only. During simultaneous playback a fade out and/or a fade in may be performed for the end part and/or the begin part respectively.

## Description

The present invention concerns a playback method for sets of audio data.

Audio playback devices typically playback sets of audio data which are stored on one or a plurality of audio data carriers. A set of audio data may for example be a song. Different types of data carriers are known and include vinyl disks, optical disks (Compact Disks, Digital Video Disks, Minidisks), magnetic tapes. A feature of some audio playback devices allows to select two or many sets of audio data from the one or the plurality of data carriers. The selection of sets of audio data may be done randomly or manually by a user. The selected sets of audio data are played back in a determined order. The audio playback device may require a delay of time when it accesses to a set of audio data. As a consequence, it may happen that between the playback of two sets of data a pause of silence occurs and keeps a listener of the audio playback device waiting.

A music making machine known from the international application PCT/GB91/O2328 comprises a disk store from which disks may be selected to be played back by playing means. The playing means supply data from the disk at a rate greater than the rate needed to hear the music. The information extracted from a disk during playing is written into a memory. By means of the memory it is possible to ensure that music is played continuously without a break occurring between the end of one piece of music and the start of the next. Thus, no more pause of silence is experienced by the listener. But, on the other hand a transition between the end of one piece of music and the start of the next may be experienced as being quiet sudden especially when the pieces of music have a different style.

It is known to mix the end of one piece of music and the start of the next by using a mixing device. The mixing device typically receives at one input data corresponding to the one piece of music and at another input data corresponding to the next piece of music. Data providing from these two inputs is mixed and the mixed data is fed to a playback device. Such a mixing device is of widespread use in for example radio broadcasting houses and in dancing clubs. The mixing device requires a disk jockey who listens to data from both inputs, synchronizes it and manually mixes them. The result of the mixing is a virtually endless piece of music made out of a plurality of pieces of music.

It is an object of the present invention to provide a solution to playback a plurality of sets of audio data by creating a continuous crossover between two sets of audio data to be played back consecutively but without an intervention of a disk jockey.

According to the present invention a solution to the above mentioned problem is found in a playback method for automatically performing a crossover between subsets out of a first and a second set of audio data to be played back consecutively, which comprises the steps of:
- playing back the first set of audio data until an end subset of the first set of audio data,
- emitting an end signal when the end subset is reached in the first set of audio data,
- simultaneously playing back the end subset and a begin subset of the second set of audio data on receiving the end signal,
- playing back a part of the second set of audio data distinct from the begin subset when the end subset is completely played back.

According to the present invention, a solution to the above mentioned problem is also found in a playback device for automatically performing and crossover of subsets out of a first and a second set of audio data to be played back consecutively comprising:
- buffer memory means to store subsets of the first and/or the second set of audio data,
- mixing means to combine audio data comprised in a predetermined end subset of the first set of audio data with data comprised in a predetermined begin subset of the second set of audio data, at least one of the predetermined end or begin subsets being stored in the buffer memory means,
- playback means to playback at least audio data combined by the mixing means,
- detecting means for detecting the predetermined end subset inside the first set of audio data.

In the following a detailed description will be given of at least one way of carrying out the invention claimed using examples and referring to figures, wherein:
- fig. 1 contains a flow chart illustrating a playback method for automatically performing a crossover,
- fig. 2 contains a schematic representation of a playback device for automatically performing a crossover,
- fig. 3 to fig. 7 contain schematic representations of sets of audio data and subsets contained in a buffer,
- fig. 8 to fig. 11 schematically illustrate examples for a crossover.

Throughout the detailed description same reference numbers will be used to designate same parts.

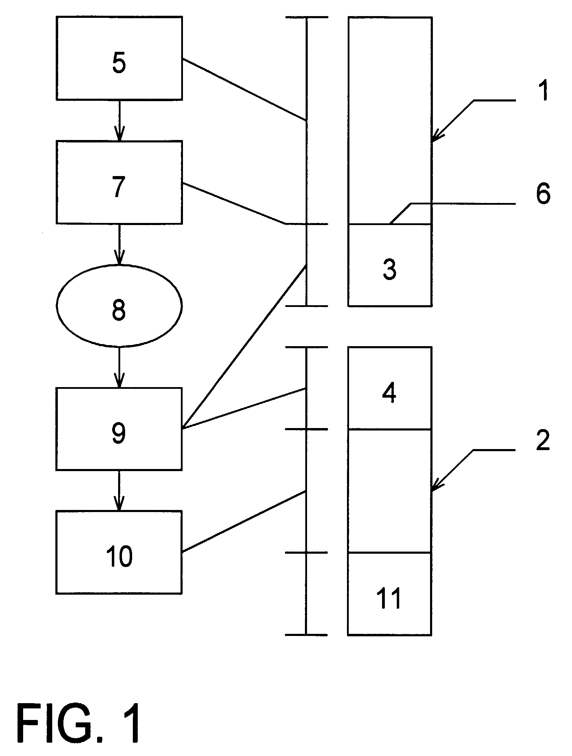

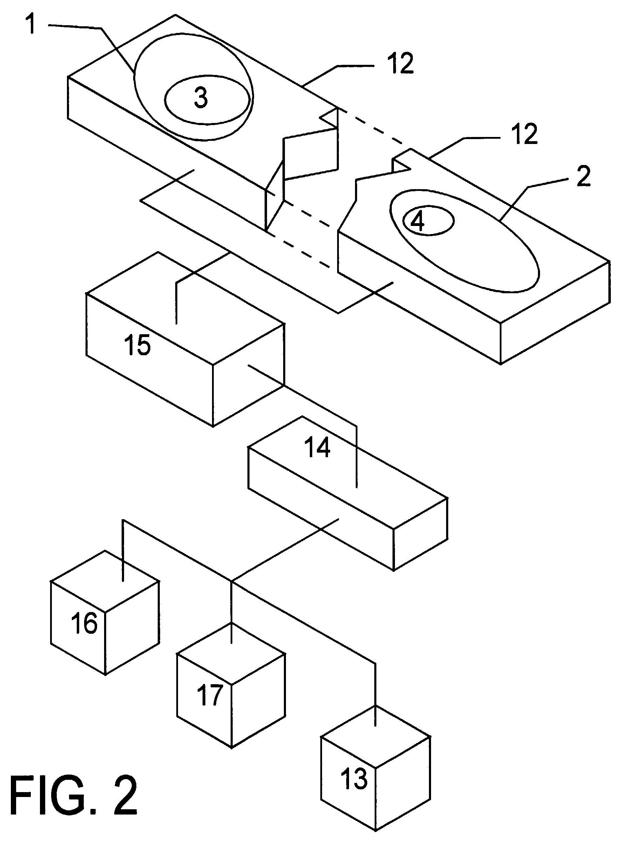

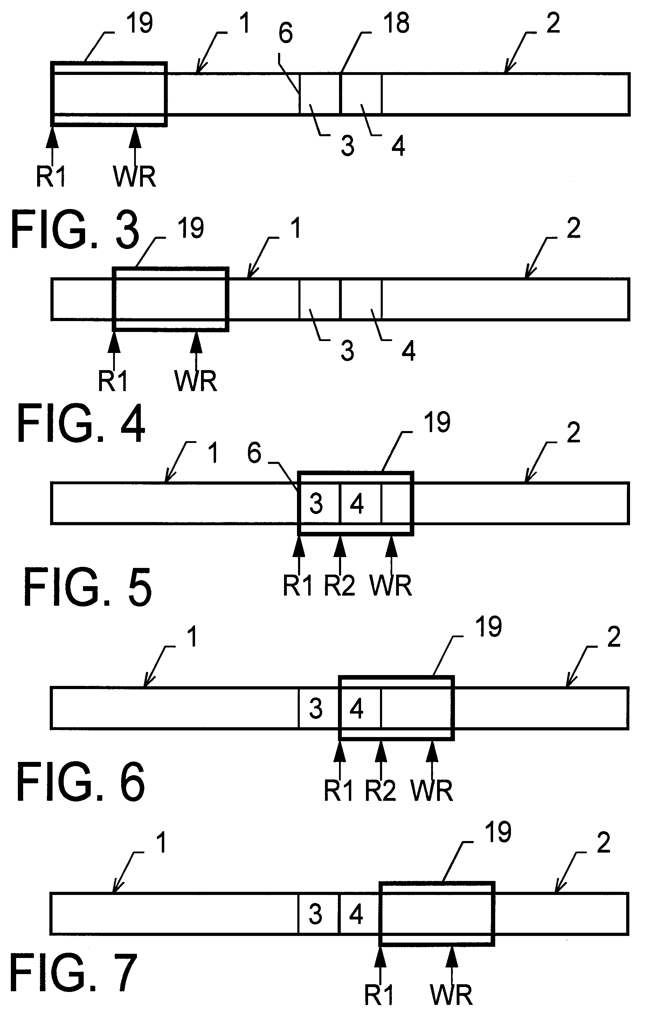

Referring to fig. 1 a first and a second set of audio data 1 and 2 are to be played back consecutively. The first set of audio data 1 comprises an end subset 3 of audio data. The first and the second sets of audio data 1 and 2 may for example represent songs which are stored on a same data carrier or on distinct data carriers. In this case the end subset 3 may be the end of the song represented by the first set of audio data 1. The second set of audio data 2 comprises a begin subset 4 of audio data which may for example represent a beginning of the song represented by the second set of audio data 2.

The first set of audio data 1 is played back in a playback step 5 until a beginning 6 of the end subset 3 is found. At this point, in an emitting step 7 an end signal 8 is produced. Following the end signal 8, the end subset 3 and the begin subset 4 are played back simultaneously in a simultaneous playback step 9. In a preferred embodiment, a time required to playback the end subset 3 is the same as a time required to playback the begin subset 4. As soon as the end subset 3 has been played back entirely in step 9, a part of the second set of audio data 2 distinct from the begin subset 4 is played back in step 10. The playback of the first and second sets of audio data 1 and 2 using steps 5, 7, 9 and 10 generates a crossover between the played back sets of audio data due to the simultaneous playback step 9 in particular. The steps 5, 7, 9 and 10 are performed automatically and eliminate the need for an intervention of a disk jockey to mix the two songs as known from prior art. The automatic performing of a crossover may also be done for other sets of audio data (not shown in fig. 1) which are to be played back after the second set of audio data 2. For this purpose, the second set of audio data 2 comprises an end subset 11 of audio data. Hence due to the automatically performed crossover between a plurality of sets of audio data during playback a virtually seamless song made out of the plurality of sets of audio data is created.

The carrier for the sets of audio data may for example be an optical disk such as a Digital Versatile Disk (DVD) or a compact disk. A DVD may contain up to hundreds of songs stored on it. In case the sets of audio data are stored on separate data carriers the latter may be optical disks comprised in a jukebox. Any other data carriers like e.g. memory chips or magnetic media may also be considered.

Referring now to fig. 2, the first and the second sets of audio data 1 and 2 located on one or a plurality of data carriers 12 may be played back using playback means 13, a buffer memory means 14 and storing means 15. The storing means 15 read audio data out the first set of audio data 1 and store these in the buffer memory means 14. The playback means 13 read audio data stored in the buffer memory means 14 and restore these as an audible signal to a user (not shown in fig. 2).

Typically, the storing means 15 allow to store audio data in the buffer memory means 14 at a rate which is greater than a read out rate at which the playback means 13 read out the audio data from the buffer memory means 14. Hence audio data may reside in the buffer memory means 14 some time ahead of playback.

In fact, the buffer memory means 14 comprises a subset of data out of the first set of audio data 1. The subset of audio data may, for example, be the end subset 3. Detecting means 16 allow to detect a presence of the end subset 3 in the buffer memory means 14. While the end subset 3 resides in the memory buffer means 14, a further subset of audio data providing from the second set of audio data 2 also resides in the buffer memory means 14. On detection of the end subset 3 by the detecting means 16 mixing means 17 combine audio data stored in the buffer memory means 14 from the end subset 3 and from the further subset. Typically the further subset is the begin subset 4. Thus obtained combined audio data are played back by the playback means 13 until the whole end subset 3 combined with the begin subset 4 has been played back.

Normal playback of audio data out of the second set of audio data 2 but distinct from the begin subset 4 is resumed by the playback means 13.

Fig. 3 schematically shows the first and the second set of audio data 1 and 2. The sets 1 and 2 are attached in point 18 to show that they are meant to be played back consecutively. A rectangle 19 is represented overlying the first set of audio data 1 to show a content of the buffer memory means 14. An arrow WR shows which data from the first set of audio data 1, is written into the buffer memory means 14. A further arrow R1 shows which data is read from the buffer memory means by the playback means 13.

In fact the representation of the buffer memory means 14 and their contents by the rectangle does not reflect a real location of the data in the buffer memory means. In practice the buffer memory means 14 could for example be realized by a Random Access Memory which would be cyclically accessed, i.e. WR would cyclically point to different addresses of the RAM when writing data from the first (or second) set of audio data into RAM. Also the further arrow R1 would cyclically address the RAM to read out data from it.

As the playback of the first set of audio data 1 is ongoing the content of the buffer memory means 14 changes as is represented by a shift of the rectangle 19 inside of the first set of audio data 1 in fig. 4 as compared to fig. 3. In fig. 5 the position of rectangle 19 shows that the buffer memory means 14 now contain the end subset 3, the begin subset 4 and further data 20 out of the second set of audio data 2. The begin 6 of the end subset 3 is detected by the detecting means 16 (not shown in fig. 5). An additional arrow R2 pointing to the begin subset 4 shows that audio data providing from the begin subset 4 is simultaneously read out with audio data from the end subset 3 from the buffer memory means 14. At this point the mixing means 17 from fig. 2 combine the audio data read out at arrows R1 and R2. Also at this point combined audio data obtained at an output of the mixing means 17 are played back by the playback means 13.

In fig. 6. the arrow R1 has reached an end of the end subset 3, i.e. a totality of the audio data contained in the end subset 3 has been combined and played back. A position of the rectangle 19 shows that the buffer memory means 14 now contain data providing from the second set of audio data 2 only.

In fig. 6 to fig. 7, R1 instantaneously shifts to R2 which is shown by the position of the rectangle 19 in fig. 7. Indeed audio data comprised between R1 and R2 in fig. 6 have already been combined with data out of the end subset 3 and been played back.

A normal playback of audio data out of the second set of audio data 2 but distinct from the begin subset 4 is resumed in fig. 7.

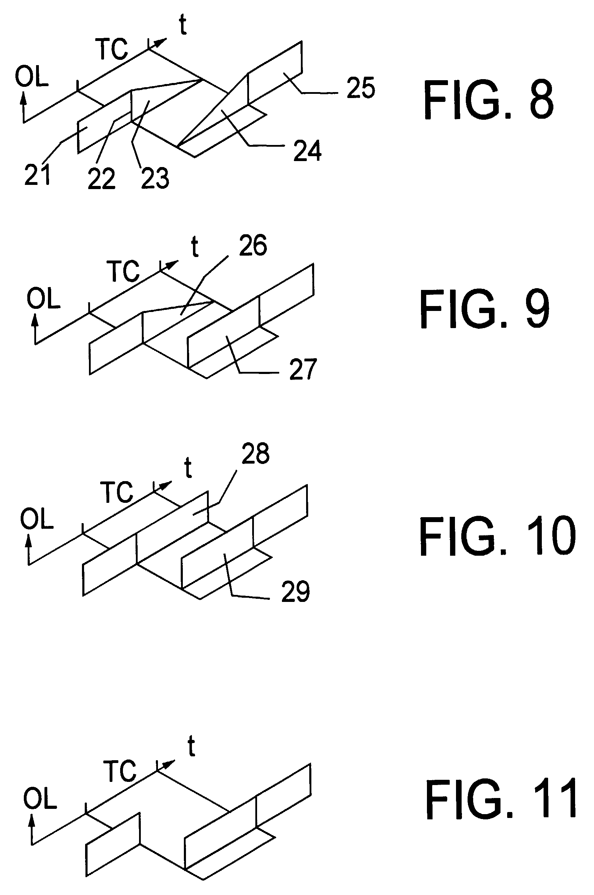

The mixing means 17 shown in fig. 2 combine data out of the end subset 3 and data out of the begin subset 4. The mixing means 17 may implement various ways to combine data. Normally data stored in the end subset 3 or the begin subset 4 is to be played back to produce an audible signal having a predetermined normal output level which is the same as for other data out of the first or second set of audio data 1 or 2. Fig 8 contains an illustration of how an output level may be modified by the mixing means 17 for the end subset 3 and the begin subset 4. An output level OL remains at a normal level in a section 21 corresponding to the playback of audio data out of the first set of the audio data 1. As a time t evolves the playback of the first set of audio data reaches the begin of the end subset 3 at a point 22 where the output level is still at the normal level. During a time period TC in which the mixing means 17 combine data out of the end subset 3 and the begin subset 4 the output level for data out of the end subset 3 is gradually reduced from the normal level to zero as represented by a section 23. In the same time period TC the output level for audio data out of the begin subset 4 is gradually increased from a level zero to a normal level as shown by a section 24. At the end of the time period TC audio data out of the second set of audio data 2 is outputted at the normal level as shown in a section 25. In this way a crossover with a fade out of audio data corresponding to the first set of audio data 1 and a fade in for audio data corresponding to the second set of audio data 2 is created.

Fig. 9 illustrates another example of how to combine audio data out of the end subset 3 and the begin subset 4. The output level for data out of the end subset 3 is gradually reduced as shown by section 26 while the output level for audio data corresponding to the begin subset 4 is kept at the normal level during all the time period TC as represented by section 27.

Fig. 10 illustrates still another example of how to combine audio data out of the end subset 3 and the begin subset 4. Audio data out of the two latter subsets is always kept at the normal level during the time period TC. The combining of the audio data corresponds to a simple adding without increasing an overall output level.

Fig. 11 illustrates still another example of how the mixing means 17 may combine audio data out of the end subset 3 and the begin subset 4 which is particularly adapted for cases in which an abrupt start is required for a restitution of audio data out of the begin subset 4. The output level for audio data out of the end subset 3 is reduced to zero during the time period TC whereas the output level for audio data corresponding to the begin subset 4 is kept at the normal level throughout the time period TC.

In a preferred embodiment of the playback device shown in fig. 2 the detecting means 16 also detect parameters stored in the first and the second set of audio data 1 and 2 and which indicate whether a fading out, a fading in or any other way to combine the end and the begin subsets 3 and 4 has to be performed by the mixing means 17.

It is understood that a person skilled in the art may effect other ways to combine audio data than the one described in the above examples, for example by varying a speed of playback for audio data out of the end subset and/or the begin subsets 3 and 4, but which remain in the scope of the present invention.

## Claims

1. A playback method for automatically performing a crossover between subsets out of a first (1) and a second (2) set of audio data to be played back consecutively, comprising the steps of:
- playing back (5) said first set of audio data until an end subset (3) of said first set of audio data (1),
- emitting (7) an end signal (8) when said end subset is reached (6) in said first set of audio data,
- simultaneously playing back (9) said end subset and a begin subset (4) of said second set of audio data on receiving said end signal,
- playing back (10) a part of said second set of audio data distinct from said begin subset (4) when said end subset is completely played back.

2. A playback method according to claim 1 characterized in that said step of simultaneously playing back comprises a step of fading out for said end subset and/or a step of fading in for said begin subset.

3. A playback method according to anyone of claims 1 or 2 characterized in that said step of simultaneously playing back comprises a step of varying a speed of playback for said end subset and/or said begin subset.

4. A playback device for automatically performing a crossover of subsets (3,4) out of a first (1) and a second (2) set of audio data to be played back consecutively comprising:
- buffer memory means (14) to store (15) subsets of said first and / or said second set of audio data,
- mixing means (17) to combine audio data comprised in a predetermined end subset (3) of said first set of audio data (1) with data comprised in a predetermined begin subset (4) of said second set of audio data (2) at least one of said predetermined end or begin subsets being stored in said buffer memory means,
- playback means (13) to playback at least audio data combined by said mixing means,
- detecting means (16) for detecting said predetermined end subset inside said first set of audio data.
